# EUROPEAN PATENT APPLICATION

(11) **EP 3 159 894 A1**
(43) Date of publication of application: **26.04.2017**
(21) Application number: 14895144.5
(22) Date of filing: 20.08.2014
(51) Int. Cl.: G10L 15/22

(54) **VEHICULAR APPLICATION CONTROL METHOD AND APPARATUS FOR MOBILE TERMINAL, AND TERMINAL**

(30) Priority: 17.06.2014 CN 201410270557
(71) Applicant: ZTE Corporation, Shenzhen, Guangdong 518057 (CN)
(72) Inventor: XIE, Zhihua, Shenzhen Guangdong 518057 (CN)
(74) Representative: Winter, Brandl, Fürniss, Hübner, Röss, Kaiser, Polte - Partnerschaft mbB
(86) International application number: PCT/CN2014/084851
(87) International publication number: WO 2015/192464

(57) **Abstract**

The present invention provides a vehicular application control method and apparatus for a mobile terminal, and the mobile terminal which relate to the field of vehicular services. The method includes: providing a vehicular application interface to a user to display icons of one or more vehicular applications specified by the user; establishing interaction with the user to receive voice information input by the user; performing voice recognition on the voice information to obtain a voice instruction of the user; and operating vehicular applications according to the voice instruction. The solution of the present invention collectively displays vehicular applications of the mobile terminal on one interface. By means of voice control, the user can operate vehicular applications on the interface, thereby effectively releasing operations of hands, improving the driving safety, making the mobile terminal more friendly provide the user with services.

## Description

### TECHNICAL FIELD

The present invention relates to the field of vehicular services, and more particularly, to a vehicular application control method and apparatus for a mobile terminal, and the mobile terminal.

### BACKGROUND

At present, existing vehicular voice products on the market are mostly products customized for a particular automobile type, and may not be popularized since its price cost is slightly high and its function is relatively fixed and single. However, existing mobile terminals, especially mobile terminals with intelligent operating systems, can fully meet requirements of core functions for general users driving cars, such as telephoning and navigation, and the mobile terminal has almost become a necessity for the human life because of providing more functions related to people's daily life, with its popularity clearly far higher than that of a customized vehicular voice product only applicable to the users driving the cars.

However, a current mobile phone has no operating system set for a specific driving scene. For example, when a driver wishes to navigate during driving, a navigation application needs to be found in an application interface displayed by pages. Since applications of a smart terminal are too rich, a driver does not release operation of hands in a finding process, which results in an effect for the driving safety.

### SUMMARY

A technical problem to be solved by the present invention is to provide a vehicular application control method and apparatus for a mobile terminal, and the mobile terminal which can enable a driver to release operations of both hands while using a vehicular application and improve the driving safety.

In order to solve the above technical problem, an embodiment of the present invention provides a vehicular application control method of a mobile terminal, including: providing a vehicular application interface to a user to display icons of one or more vehicular applications specified by the user; establishing interaction with the user to receive voice information input by the user; performing voice recognition on the voice information to obtain a voice instruction of the user; and operating the vehicular applications according to the voice instruction.

The vehicular application interface further includes a voice icon; and the step of establishing interaction with the user to receive voice information input by the user includes: generating a touch instruction after the user clicks the voice icon; and establishing interaction with the user according to the touch instruction to receive voice information input by the user.

The voice icon is displayed on the vehicular application interface as one first icon indicating that it is not enabled when no interaction is established with the user; and the voice icon is displayed on the vehicular application interface as one second icon indicating that it has been enabled when interaction is established with the user.

The step of establishing interaction with the user to receive voice information input by the user includes: establishing interaction with the user by a wearable device and receiving voice information input by the user by the wearable device.

The display interface at least includes one do-not-disturb (DND) application; the providing the vehicular application interface to the user to display icons of one or more vehicular applications in the mobile terminal specified by the user includes: acquiring a current DND status of the mobile terminal to obtain an acquisition result; displaying a third icon corresponding to the DND application on the vehicular application interface if the acquisition result indicates that no DND function is enabled on the mobile terminal; and displaying a fourth icon corresponding to the DND application on the vehicular application interface if the acquisition result indicates that the mobile terminal has enabled the DND function.

The vehicular application interface further includes a first area for displaying a voice instruction obtained by voice recognition, and/or message time information, and/or driving information of the user.

In addition, another embodiment of the present invention provides a vehicular application control apparatus for a mobile terminal, including a providing module, which is configured to provide a vehicular application interface to a user to display icons of one or more vehicular applications in a mobile terminal specified by the user; a receiving module, which is configured to establish interaction with the user to receive voice information input by the user; a recognizing module, which is configured to perform voice recognition on the voice information to obtain a voice instruction of the user; a processing module, which is configured to operate vehicular applications according to the voice instruction.

The display interface further includes a voice icon; the receiving module includes an induction sub-module, which is configured to generate a touch instruction after the user clicks the voice icon; a receiving sub-module, which is configured to establish interaction with the user according to the touch instruction to receive voice information input by the user.

The receiving module includes a wireless interactive sub-module, which is configured to establish interaction with the user by a wearable device and receive voice information input by the user through the wearable device.

In addition, another embodiment of the present invention provides a mobile terminal including the above-described vehicular application control apparatus.

Advantageous effects of the above-described technical solution of the present invention are as follows: the solution of the present invention collectively displays vehicular applications of the mobile terminal on one interface. By means of voice control, the user can operate vehicular applications on the interface, thereby effectively releasing operations of hands, improving the driving safety, making the mobile terminal more friendly provide the user with services.

### BRIEF DESCRIPTION OF DRAWINGS

FIG. 1 is a schematic diagram illustrating steps of a vehicular application control method for a mobile terminal according to the present invention;

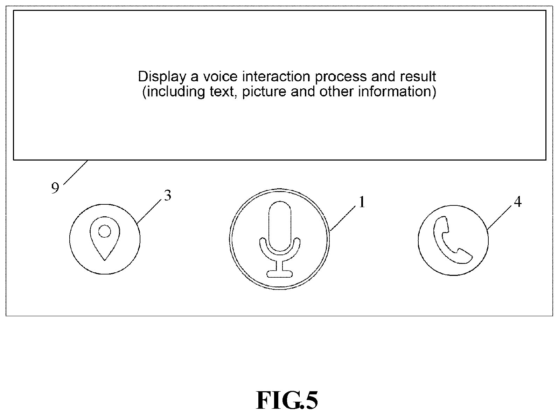

FIG. 2 to FIG. 5 are schematic diagrams illustrating layouts of vehicular application interfaces according to the present invention; and
FIG. 6 is a schematic structural diagram illustrating a vehicular application control apparatus of a mobile terminal according to the present invention.

### DETAILED DESCRIPTION

In order to make technical problems to be solved by the present invention, technical solutions and advantages be clearer, the present invention will be described in detail with reference to accompanying drawings and specific embodiments.

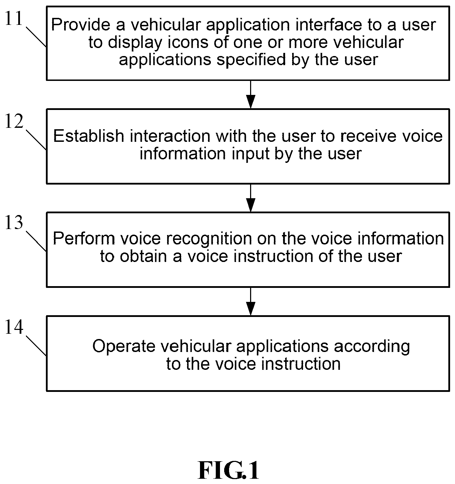

An embodiment of the present invention provides a vehicular application control method of a mobile terminal. As shown in FIG. 1, the vehicular application control method includes:
In Step 11, a vehicular application interface is provided to a user to display icons of one or more vehicular applications specified by the user.
In Step 12, interaction with the user is established to receive voice information input by the user.
In Step 13, voice recognition is performed on the voice information to obtain a voice instruction of the user.
In Step 14, vehicular applications are operated according to the voice instruction (the user may further perform a touch operation on a vehicular application in the vehicular application interface).

In the above description, it may be known that the vehicular application control method of the present invention collectively displays vehicular applications of the mobile terminal on one interface. By means of voice control, the user can operate vehicular applications on the interface, thereby effectively releasing operations of hands, improving the driving safety, making the mobile terminal more friendly provide the user with services.

Furthermore, a vehicular service method of the present invention provides the user with two voice input methods.

One voice input method is that a voice icon is provided on a vehicular application interface; in the above step 12, after the user clicks the voice icon, a touch instruction is generated; and interaction with the user is established according to the touch instruction to receive voice information input by the user. In order to enable the vehicular application interface to provide more information to the user, the voice icon is displayed on the vehicular application interface as a first icon indicating that it is not enabled when no interaction is established with the user; and the voice icon is displayed on the vehicular application interface as a second icon indicating that it has been enabled when interaction is established with the user. The user may understand a working state of the mobile terminal through different voice icons.

Exemplarily, the voice icon is a still microphone (that is, the first icon) when a voice interaction flow is not started or is idle; a microphone icon may automatically adjust its background color according to a volume level when the user's voice is entered, and in addition, a button background near a microphone will automatically adjust its background color according to the volume level, and will show a sound wave pattern (that is, the second icon) which changes along with the volume change around a button. When the voice recognition is performed, the background color of the microphone icon does not change, the background color of the icon is also restored, the sound wave pattern disappears, while two lines changing from brightness to darkness may be shown on a border of the icon and make a clockwise or counterclockwise rotation along a track of the border of the icon.

Another voice input method is that interaction with the user is established by a wearable device and voice information input by the user is received by the wearable device in the step 12, so as to provide a user with a more convenient operation mode. The wearable device may be a smart eyeglass, a smart headphone or the like, and is capable of transmitting voice information to the mobile terminal via Bluetooth.

In addition, the display interface at least includes one DND application; in order to enable the user to obtain more information by an icon of the DND application, in the above step 11, a current DND status of the mobile terminal is acquired to obtain an acquisition result; a third icon corresponding to the DND application is displayed on the vehicular application interface if the acquisition result indicates that no DND function is enabled on the mobile terminal; a fourth icon corresponding to the DND application is displayed on the vehicular application interface if the acquisition result indicates that the mobile terminal has enabled the DND function.

Furthermore, in order to make the information provided by the vehicular service method of the present invention more abundant, as a preferred solution, a first area is provided on the vehicular application interface for displaying a voice instruction obtained by voice recognition and/or message time information, and/or driving information (e.g., a driving speed) of the user.

The vehicular application interface of the present invention will be described hereinafter.

### First embodiment

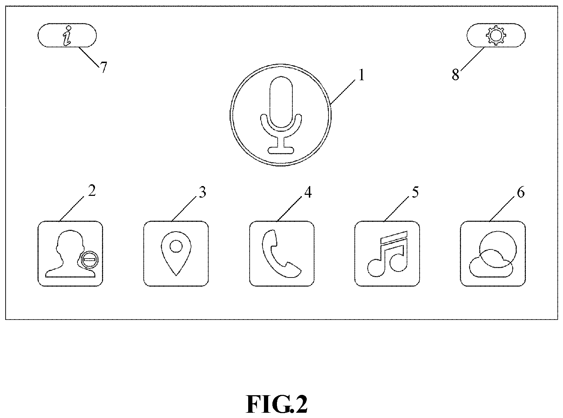

FIG. 2 illustrates a vehicular application interface including a voice icon 1, as well as icons of a DND application 2, a navigation application 3, a telephone application 4, a music application 5, a weather application 6, a help application 7 and a setting application 8. The icons are of a rounded rectangle. In addition to the voice icon 1, the icons of other vehicular applications can be replaced mutually; the voice icon 1 is placed on a center position of a screen, with a relatively large size, so as to be suitable for being clicked by a user driving a car. A switch identifier is displayed in the icon of the DND application 2 for showing an on or off status of the DND application. The icons are shaped as the rounded rectangle around which functional description or informative text information (not shown in the figure) may be provided.

### Second embodiment

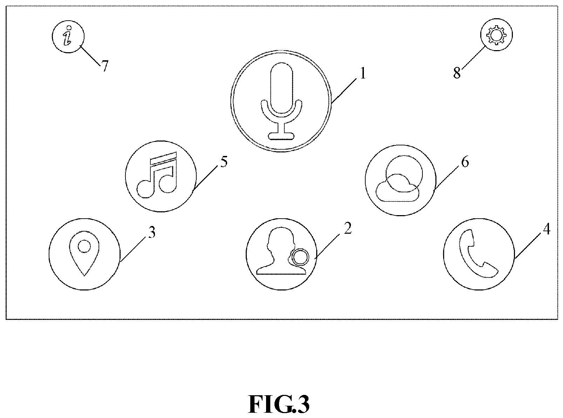

FIG. 3 illustrates a vehicular application interface including a voice icon 1, as well as icons of a DND application 2, a navigation application 3, a telephone application 4, a music application 5, a weather application 6, a help application 7 and a setting application 8. The icons are rounded. In addition to the voice icon 1, the icons of other vehicular applications can be replaced mutually; the voice icon 1 is spaced on a center position of a screen, with a relatively large size, so as to be suitable for being clicked by a user driving a car. A switch identifier is displayed in the icon of the DND application 2 for showing an on or off status of the DND application. The icons are shaped as the rounded rectangle around which functional description or informative text information (not shown in the figure) may be provided.

### Third embodiment

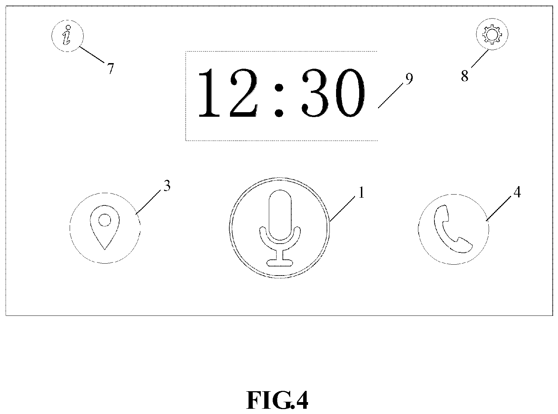

FIG. 4 illustrates a layout of a vehicular application interface including a first area 9 (the first area displays time information), and the vehicular application interface further includes a voice icon 1, as well as icons of a navigation application 3, a telephone application 4, a help application 7 and a setting application 8. In addition to the voice icon 1, the icon of other vehicular applications can be replaced mutually; the voice icon 1 is placed on a center position of a screen, with a relatively large size, so as to be suitable for being clicked by a user driving a car.

### Fourth embodiment

5 is a layout of a vehicular application interface including a first area 9 (the first area displays a recognized voice instruction and a voice interactive process), and the vehicular application interface further includes a voice icon 1, as well as icons of a navigation application 3 and a telephone application 4. In addition to the icon 1 of the voice application, the icons of the navigation application and the telephone application can be replaced mutually; the voice icon 1 is placed on a center position of a screen, with a relatively large size, so as to be suitable for being clicked by a user driving a car.

In summary, the vehicular application interface of the present invention is very simple, and is very suitable for a driving scene in terms of interaction and function practicability, and is applicable to all the mobile terminals.

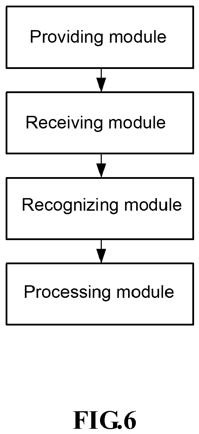

In addition, as shown in FIG. 6, the present invention further provides a vehicular application control apparatus of a mobile terminal, including:
a providing module, which is configured to provide a vehicular application interface to a user to display icons of one or more vehicular applications in a mobile terminal specified by the user;
a receiving module, which is configured to establish interaction with the user to receive voice information input by the user;
a recognizing module, which is configured to perform voice recognition on the voice information to obtain a voice instruction of the user;
a processing module, which is configured to operate vehicular applications according to the voice instruction.

In the above description, it may be known that the vehicular application apparatus of the present invention collectively displays vehicular applications of the mobile terminal on one interface. By means of voice control, the user can operate vehicular applications on the interface, thereby effectively releasing operations of hands, improving the driving safety, making the mobile terminal more friendly provide the user with services.

Furthermore, a vehicular service apparatus of the present invention provides a user with two voice input modes.

One voice input mode is that a voice icon is provided on a vehicular application interface;
the receiving module includes:
an induction sub-module, which is configured to generate a touch instruction after the user clicks the voice icon; and
a receiving sub-module, which is configured to establish interaction with the user according to the touch instruction to receive voice information input by the user.

Another voice input mode is that the receiving module includes a wireless interactive sub-module, which is configured to establish interaction with the user by a wearable device and to receive voice information input by the user by the wearable device, which can provide the user with a more convenient operation mode.

Obviously, the vehicular application control apparatus of this embodiment corresponds to the vehicular application control method of the present invention, and a technical effect attained by the method can be achieved by this apparatus as well.

Furthermore, the present invention provides a mobile terminal including the above-described vehicular application control apparatus. The mobile terminal may be a mobile phone, a PAD or the like. In the mobile terminal, a providing module may be a display screen of the mobile terminal and a processing chip controlling the display screen; a receiving module may include a microphone of the mobile terminal and may directly receive voice information of the user; and the receiving module may also include a wireless communication receiver for receiving the voice information transmitted by the user via a wearable device. A recognizing module may be a voice recognition chip of the mobile terminal and a processing module is a processor of the mobile terminal.

While the foregoing is a preferred implementation of the present invention, it should be noted that modifications and improvements may be made thereto by those skilled in the art without departing from the principles of the present invention, and should also be considered as a protection scope of the present invention.

### INDUSTRIAL APPLICABILITY

As described above, by means of the above-described embodiments and the preferred implementation, vehicular applications of the mobile terminal are collectively displayed on one interface. By means of voice control, the user can operate vehicular applications on the interface, thereby effectively releasing operations of hands, improving the driving safety, making the mobile terminal more friendly provide the user with services.

## Claims

1. A vehicular application control method of a mobile terminal, comprising:
providing a vehicular application interface to a user to display icons of one or more vehicular applications specified by the user;
establishing interaction with the user to receive voice information input by the user;
performing voice recognition on the voice information to obtain a voice instruction of the user; and
operating the vehicular applications according to the voice instruction.

2. The vehicular application control method according to claim 1, wherein the vehicular application interface further comprises a voice icon;
the step of establishing interaction with the user to receive voice information input by the user comprises:
generating a touch instruction after the user clicks the voice icon; and
establishing interaction with the user according to the touch instruction to receive voice information input by the user.

3. The vehicular application control method according to claim 2, wherein
the voice icon is displayed on the vehicular application interface as one first icon indicating that it is not enabled when no interaction is established with the user; and
the voice icon is displayed on the vehicular application interface as one second icon indicating that it has been enabled when interaction is established with the user.

4. The vehicular application control method according to claim 1, wherein the step of establishing interaction with the user to receive voice information input by the user comprises:
establishing interaction with the user through a wearable device and receiving voice information input by the user through the wearable device.

5. The vehicular application control method according to claim 1, wherein the display interface at least comprises one do-not-disturb DND application;
the providing the vehicular application interface to the user to display icons of one or more vehicular applications in the mobile terminal specified by the user comprises:
acquiring a current DND status of the mobile terminal to obtain an acquisition result;
displaying a third icon corresponding to the DND application on the vehicular application interface if the acquisition result indicates that no DND function is enabled on the mobile terminal; and
displaying a fourth icon corresponding to the DND application on the vehicular application interface if the acquisition result indicates that the mobile terminal has enabled the DND function.

6. The vehicular application control method according to claim 1, wherein the vehicular application interface further comprises a first area for displaying a voice instruction obtained by voice recognition, and/or message time information, and/or driving information of a user.

7. A vehicular application control apparatus of a mobile terminal, comprising:
a providing module, which is configured to provide a vehicular application interface to a user to display icons of one or more vehicular applications in a mobile terminal specified by the user;
a receiving module, which is configured to establish interaction with the user to receive voice information input by the user;
a recognizing module, which is configured to perform voice recognition on the voice information to obtain a voice instruction of the user; and
a processing module, which is configured to operate the vehicular applications according to the voice instruction.

8. The vehicular application control apparatus according to claim 7, wherein the display interface further comprises a voice icon;
the receiving module comprises:
an induction sub-module, which is configured to generate a touch instruction after the user clicks the voice icon; and
a receiving sub-module, which is configured to establish interaction with the user according to the touch instruction to receive voice information input by the user.

9. The vehicular application control apparatus according to claim 7, wherein the receiving module comprises:
a wireless interactive sub-module, which is configured to establish interaction with the user by a wearable device and receive voice information input by the user through the wearable device.

10. A mobile terminal, comprising the vehicular application control apparatus according to any of claims 7 to 9.
